(19)

**Europäisches Patentamt**

**European Patent Office**

**Office européen des brevets**

(11) **EP 4 765 832 A1**

(12) **EUROPEAN PATENT APPLICATION**

(43) Date of publication:
24.06.2026 Bulletin 2026/26

(21) Application number: 24307203.0

(22) Date of filing: **19.12.2024**

(51) International Patent Classification (IPC):
*H04N 21/431* (2011.01)    *G06F 1/3203* (2019.01)
*G06F 1/3234* (2019.01)    *H04N 21/443* (2011.01)

(52) Cooperative Patent Classification (CPC):
**H04N 21/431; G06F 1/3203; G06F 1/3265;
H04N 21/4436**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **DEMARTY, Claire-Helene**
**35520 MONTREUIL LE GAST (FR)**

• **BLONDE, Laurent**
**35235 THORIGNE-FOUILLARD (FR)**
• **AUMONT, Franck**
**35770 VERN SUR SEICHE (FR)**
• **LE MEUR, Olivier**
**35160 TALENSAC (FR)**
• **REINHARD, Erik**
**35630 HEDE-BAZOUGES (FR)**

(74) Representative: **Interdigital**
**Immeuble ZEN 2**
**845 A, avenue des Champs Blancs**
**35510 Cesson-Sévigné (FR)**

(54) **METHOD AND DEVICE FOR PROVIDING FEEDBACK ON ENERGY CONSUMPTION**

(57)    A method and device use a processing algorithm to perform energy control of a content. The impact of the energy control may be determined, in relation with health, economics, pollution, raw material, social recognition or biodiversity. An indicator representing the impact of energy control may be displayed, allowing the user to evaluate values of these indicators in relation to the quality level obtained on the energy-controlled content.

Figure 3

## Description

## TECHNICAL FIELD

The disclosure is in the field of multimedia content distribution, and at least one embodiment relates more specifically to energy consumption feedback in systems handling a visual content such as an image or video.

## BACKGROUND ART

Reducing energy consumption of electronic devices has become a requirement not only for manufacturers of electronic devices but also to limit, as much as possible, the environmental impact and to contribute to the emergence of a sustainable display industry. The increase in display resolution from SD to HD, then to 4K and soon to 8K and beyond, as well as the introduction of high dynamic range imaging, has brought about a corresponding increase in energy requirements of display devices. This is not consistent with the global need to reduce energy consumption knowing that a huge number of devices has a display (i.e., TV, Mobile phones, tablets, etc.). Due to climate change, there is an urgent need to reduce globally our carbon footprint. This can be done in the CE domain, by reducing the energy consumption of devices for example. Indeed, displays are the most important source of energy consumption, for consumer electronic devices, either battery-powered (e.g., smartphones, tablets, head-mounted displays, car display screens) or not (e.g., television sets, advertisement display panels).

Different techniques for energy reduction in the video distribution chain (production, encoding, transmission, decoding, rendering) have been developed in the recent years, for example using image (or video) processing algorithms that modify an image, for example by altering (i.e., reducing) its contrast, luminance, or color levels or by applying an attenuation map to the image. This allows for example to reduce the energy requirements of display devices at the end of the distribution chain. However, most of these techniques are based on algorithms for reducing energy and simultaneously preserving the quality of experience (QoE). Algorithms dedicated to energy reduction tasks may realize their tasks with different degrees of Quality of Experience: they may introduce no defect, or no visible defects; they may also create visible defects of different strength or disturbance for the end user.

In case no defect or no visible defect is introduced (called flawless case in the following), there is no need to balance energy reduction with Quality of Experience (QoE), as the latter is not modified. This is the case in video broadcast, where there is the constraint that the image displayed on the user's screen should show as few degradations as possible for a given transmission and display environment.

While an absolutely high-quality requirement is understandable for feature movies or programs with a high artistic value, it can be evaluated that many other program types like weather forecast, news, TV games, cartoons, sitcoms, advertisements do not need an absolutely crisp quality. At least this is not a need for all users and reducing quality on selected program types is a possibility for many of them, even on broadcast programs, specifically if there is a gain in energy. Therefore, it may be interesting to provide a way to balance the energy reduction against QoE. In other words, to introduce some defects in the image/video in order to reduce the energy consumption. Such defects, even if strong, are possibly acceptable to the end user and their presence can be even more accepted if the users are rewarded e.g., by explicit and direct benefits that could be easily understandable for them. However, there is a limit of lowest acceptable quality. This limit may be different for each user and may depend on the viewing context and type of content. For example, the highest energy reduction is to shut down the device: this may not be acceptable for the viewer.

## SUMMARY

A first aspect is directed to a method comprising obtaining a visual content, obtaining a strength value for an energy consumption control algorithm that controls an energy consumption needed for the visual content, determining a value representative of an impact of the energy consumption control on at least one benefit for a user, providing at least one indicator representative of the determined value, applying the energy consumption control algorithm to the visual content according to the strength value and providing the modified visual content.

A second aspect is directed to a device comprising a processor configured to obtain a visual content, obtain a strength value for an energy consumption control algorithm that controls an energy consumption needed for the visual content, determine a value representative of an impact of the energy consumption control on at least one benefit for a user, provide at least one indicator representative of the determined value, apply the energy consumption control algorithm to the visual content according to the strength value and provide the modified visual content.

In at least one embodiment of first and second aspects, the at least one indicator and the modified visual content are displayed on a screen. At least one embodiment of first and second aspects further comprises obtaining further input for modifying the strength value and updating the indicator and modified visual content based on the modified strength value. At least one embodiment of first and second aspects further comprises iterating over multiple strength values until obtaining further input indicating a user satisfaction. In at least one embodiment of first and second aspects, the at least one indicator is representative of health or economics or pollution or raw material or social recognition or biodiversity.

A third aspect is directed to non-transitory computer readable medium containing comprising instructions which, when the program is executed by a computer, cause the computer to carry out the described embodiments related to the first aspect.

A fourth aspect is directed to a computer program comprising instructions which, when the program is executed by a computer, cause the computer to carry out any of the described embodiments or variants related to the first aspect.

The above presents a simplified summary of the subject matter to provide a basic understanding of some aspects of the present disclosure. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description provided below.

**BRIEF SUMMARY OF THE DRAWINGS**

The present disclosure may be better understood by consideration of the detailed description below in conjunction with the accompanying figures in which:

Figure 1 illustrates a block diagram of an example of display device in which various aspects and embodiments are implemented,
Figures 2A and 2B illustrate examples of indicators representing the impact of energy consumption control according to embodiments,
Figure 3 illustrates an example of architecture for quality/energy tradeoff control according to an embodiment, and
Figure 4 illustrates an example process for providing indicators of the impact of energy consumption control according to embodiments.

It should be understood that the drawings are for purposes of illustrating examples of various aspects, features and embodiments in accordance with the present disclosure and are not necessarily the only possible configurations. Throughout the various figures, like reference designators refer to the same or similar features.

**DETAILED DESCRIPTION**

Embodiments described hereafter have been designed with the foregoing in mind and introduce an indicator representing energy savings or increase. In at least one embodiment, the indicator is related to the multi-modal content distribution and consumption chain and represents the impact of energy reduction algorithms that are applied to the multi-modal content. The multi-modal content may comprise at least one or more modality media selected among for example an image, a video (e.g., an audio-visual content), a sound, a text and a haptic effect. In at least one embodiment, the indicator is related to energy consumption in a more general sense such as the energy consumption of a house, a building, a vehicle, or an equipment. It may also apply to the consumption of other resources such as water. Embodiments are not restricted to energy reduction but, in a broader view, also comprise energy increase. Indeed, displaying bad indicators when a user raises the heating of the house may make them feel guilty and may result into adopting another setting. Therefore, while the embodiments are described in the objective of energy reduction, embodiment also apply to the more general case of energy control that comprises both the energy reduction and energy increase. However, the description below focuses on energy reduction to ensure clarity. In other words, the embodiments will be described hereafter in the example application of reducing energy consumption when displaying (or more generally when using) a visual content.

In the context of visual content display, one objective is primarily to minimize the energy consumption of visual media presentation or display, on TV sets or on mobile displays while controlling the QoE of the visual media presentation. For that purpose, the users may choose a personal balance between a given quality level of a displayed content (after some energy-reduction image processing) and the corresponding energy reduction achieved by modifying the quality level. Giving the opportunity to the users to decrease their energy consumption and explicitly displaying a link between the saved energy and the quality reduction of the content they consume is a first step towards globally reducing the energy consumption of the Information & Communication technology (ITC) domain. However, the amount of energy saved and its link with the quality of the content may not be very clear or even understandable for the average user. To convey clearly the impact of the energy savings, it is important to find, propose, compute and display indicators of benefits for the user, that are more intelligible that an amount of energy reduction (for example expressed in kw/h), so that the users will be encouraged to act by reducing the level of quality of the video algorithm and thus impact positively our environment. Such indicators may be linked in a fine and continuous manner to the quality of the energy-reduced visual content, so that the users will be able to control the strength level of the algorithm also in a fine and continuous manner.

Embodiments herein propose to give the users an access to an explicit view of the value of some understandable indicators such as direct benefits for their health, direct economic benefits, direct reduction in terms of pollution levels, direct indication on the protection of the biodiversity, direct indication on the preservation of the amount of raw materials, and benefit in terms of social recognition, that would derive from an action of the user to reduce the quality of the content consumed (and thus its energy consumption). It must be understood that understandable indicators are not restricted to the above list which are provided as examples.

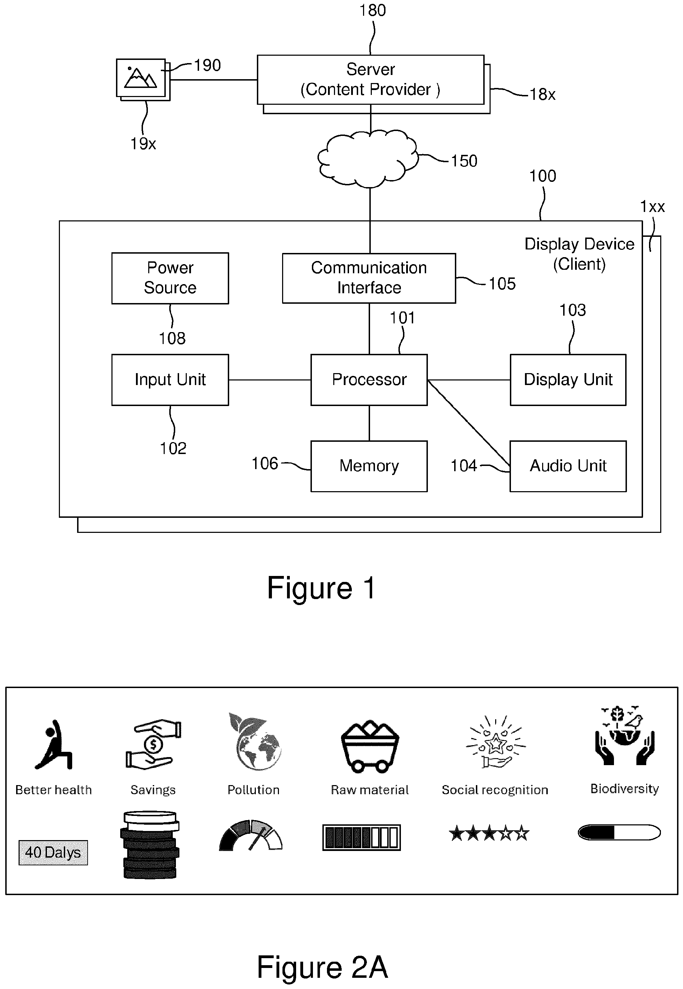

**Figure 1** illustrates a block diagram of an example of display device in which various aspects and embodiments are implemented. In the depicted environment, a user interacts with the display device 100, for example a television, that is connected to a server 180 for example operated by a content provider. The server 180 delivers multimedia content 190 such as video streams based on images. In a video distribution system, multiple devices 100, 1xx are interacting with multiple content providers and corresponding servers 180, 18x delivering multiple multimedia content 190, 19x. A single content provider may use a plurality of servers. The devices exchange data through a communication network 150.

The communication network 150 preferably uses a communication standard to provide interoperability between content provider and display devices. Such communication standard may be wireless, such as cellular (e.g. LTE) communications, Wi-Fi communications, and the like, to ensure the mobility of the display device. Cable, satellite or terrestrial digital television broadcast communication may also be used for the communication network 150 as well as broadband television communications. Such digital television standards may on based on well-established standards like DVB, ATSC, or the like. General purpose network standards may also be used, for example based on Ethernet.

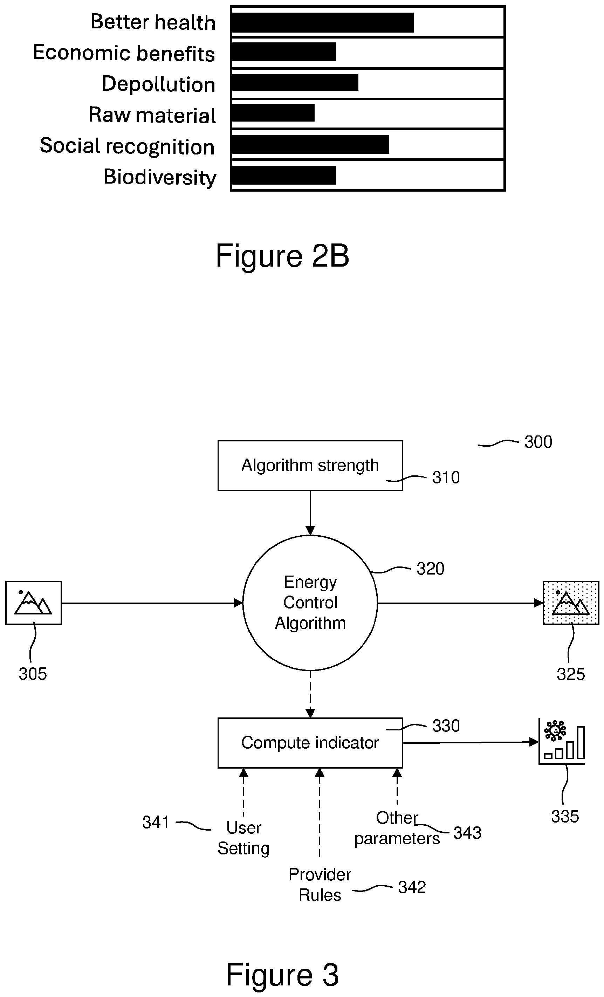

The display device 100 comprises a processor 101. The processor 101 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, electronic circuitry, and the like. The term processor used herein encompasses these variants. The processor may perform data processing such as the process 300 for controlling the energy consumption reduction of devices displaying a visual content of figure 3.

The processor 101 may be coupled to an input unit 102 configured to convey user interactions. Multiple types of inputs and modalities can be used for that purpose. Physical keypad or a touch sensitive surface are typical examples of input adapted to this usage although voice control could also be used. In addition, the input unit may also comprise a digital camera able to capture still pictures or video in two dimensions or a more complex sensor able to determine the depth information in addition to the picture or video and thus able to capture a complete 3D representation.

The processor 101 may be coupled to a display unit 103 configured to output visual data to be displayed on a screen. Multiple types of displays can be used for that purpose such as a liquid crystal display (LCD) or organic light-emitting diode (OLED) display unit. The processor 101 may also be coupled to an audio unit 104 configured to render sound data to be converted into audio waves through an adapted transducer such as a loudspeaker for example.

The processor 101 may be coupled to a communication interface 105 configured to exchange data with external devices. The communication preferably uses a wireless communication standard to provide mobility of the display device, such as cellular (e.g., LTE) communications, Wi-Fi communications, and the like.

The processor 101 may access information from, and store data in, the memory 106, that may comprise multiple types of memory including random access memory (RAM), read-only memory (ROM), a hard disk, a subscriber identity module (SIM) card, a memory stick, a secure digital (SD) memory card, any other type of memory storage device. In embodiments, the processor 101 may access information from, and store data in, memory that is not physically located on the device, such as on a server, a home computer, or another device.

The processor 101 is configured to execute an image energy reduction algorithm that modifies an input image into an image that requires less energy when being used, for example displayed, in comparison to using the input image. Different techniques have been disclosed to provide such feature.

The processor 101 may receive power from the power source 108 and may be configured to distribute and/or control the power to the other components in the device 100. The power source may be any suitable device for powering the device. As examples, the power source may include one or more dry cell batteries (e.g., nickel-cadmium (NiCd), nickel-zinc (NiZn), nickel metal hydride (NiMH), lithium-ion (Li-ion), and the like), solar cells, fuel cells, and the like.

While the figure depicts the processor 101 and the other elements 102 to 108 as separate components, it will be appreciated that these elements may be integrated together in an electronic package or chip. It will be appreciated that the display device 100 may include any sub-combination of the elements described herein while remaining consistent with the embodiments described hereafter. The processor 101 may further be coupled to other peripherals or units not depicted in figure 1 which may include one or more software and/or hardware modules that provide additional features, functionality and/or wired or wireless connectivity. For example, the peripherals may include a universal serial bus (USB) port, a vibration device, a television transceiver, a hands-free headset, a Bluetooth® module, a frequency modulated (FM) radio unit, a digital music player, a media player, a video game player module, an Internet browser, and the like. For example, the processor 101 may be coupled to a localization unit configured to localize the display device within its environment. The localization unit may integrate a GPS chipset providing longitude and latitude position regarding the current location of the display device but also other motion sensors such as an accelerometer and/or an e-compass that provide localization services.

In at least one embodiment, the processor 101 of the display device 100 is configured to display on the display unit 103 an image according to embodiments described further below. In a first variant embodiment, the image 190 is obtained from the content provider server 180 through the communication network 150. In a second variant embodiment, the image is obtained from the memory 106, stored for example after being captured by the input unit 102 or being transferred from a server.

Typical examples of device 100 are smartphones, cell phones, tablets, laptops, monitors, head-mounted displays, television sets, television signal receivers, video projectors, computer screens, vehicles (e.g., control and/or entertainment systems for cars, planes, boats, etc.), advertisement display panels, medical monitors, etc. However, any device or composition of devices that provides similar functionalities can be used as display device 100 while still conforming with the principles of the disclosure.

In at least one embodiment, the device does not include a display unit but prepares data representative of a visual content so that another device can utilize the visual content for further processing or usage. In at least one embodiment, such device prepares data to be displayed by another device such as a screen. Example of such devices are set top boxes, media players, desktop computers, encoders, decoders, servers, gateways, computing grids, cloud computers, etc.

At least one example of an embodiment can involve a device including an apparatus as described herein and at least one of (i) an antenna configured to receive a signal, the signal including data representative of the image information, (ii) a band limiter configured to limit the received signal to a band of frequencies that includes the data representative of the image information, and (iii) a display configured to display an image from the image information.

For the sake of simplicity, the embodiments are described herein as applied to multi-modal content, and more particularly to images, and embodiments are described as being implemented in a display device. In such context, the energy reduction may be related to the electrical consumption of the device and the notion of quality may be related to the visual quality of the displayed image. In another context, the energy reduction may be related to the green house gas emission of using the display. Indicators may be displayed on the display device but may also be provided using other means such as rendered as a vocal message by a home assistant (or by loudspeaker) or rendered as an haptic feedback by haptic actuators. In addition, the principles of such embodiment apply in other contexts.

In embodiments, the principles apply to a device providing a service to a user, for example a streaming application. In such context, the energy reduction may be related to the quality of the service, for example, the resolution of the content, the available bitrate, the application response, the quality of the network connection, etc.

In embodiments, the principles apply to a house. In such context, the energy reduction may be related to the energy consumption of the house, including electricity, gas or other energy but also to the water consumption or the green house gas emission of the house in its functioning. Thus, the notion of quality may be related to the comfort of the house. Indicators may be displayed or rendered (e.g. vocal message) by a home assistant.

In embodiments, the principles apply to a vehicle such as a car, a truck, a boat, a train, a plane, or other transportation devices. In such context, the energy reduction may be related to the energy consumption of the vehicle, including electricity, petrol or other energy powering the vehicle, or the emission of green house gas and the notion of quality may be related to the comfort and efficiency of the vehicle, as well as the time needed for a trip. Indicators may be displayed on the vehicle entertainment screen or vehicle control screen or rendered by one or more loudspeakers as a vocal message. For example, if the speed limit is 130km/h and the user sets its cruise control to 11 0km/h, the vehicle will use less energy and the indicators may reflect this energy-aware setting.

In embodiments, the principles apply to an industrial equipment or machine. In such context, the energy reduction may be related to the energy consumption of the equipment, including electricity, gas, petrol or other energy powering the equipment as well as the amount of raw material needed by the equipment. The notion of quality may be related to the efficiency of the equipment, for example including its emission of toxic waste and its emission of green house gas. Indicators may be displayed on the screen of the equipment or rendered by one or more loudspeakers as a vocal message.

**Figures 2A and 2B** illustrate examples of indicators representing the impact of energy consumption control according to embodiments. Indeed, a numerical value of energy reduction or increase is neither easily understandable nor motivating enough for the users to change their habits and accept a change of quality. Therefore, embodiments herein propose to compute and communicate to the user some more understandable indicators that would be directly related to them. The examples of figures 2A and 2B show examples of graphical representations of indicators to be explicitly shown on a display. Indicators could be chosen in a list comprising, for example, a health indicator, an economic indicator, a level of pollution indicator, a level of raw material preservation indicator, a level of biodiversity protection indicator, or an indicator of the user's social recognition increase. Not all these indicators are of interest for all users but all are either more understandable for users (e.g., the amount of money saved, the increase in terms of health quality, the increase in terms of social recognition) or more encouraging to do the effort of reducing their energy consumption, as the benefit for the end users appears clearly (e.g, a better health, more money, a better social recognition, an increase biodiversity, etc.).

The general case is related to the control of energy, comprising energy saving and increasing energy consumption. The description below is done for energy saving but the principles apply similarly to the increase of energy consumption.

**Figure 3** illustrates an example of architecture for quality/energy tradeoff control according to an embodiment. This architecture is for example implemented by a device such as the device (100) of figure 1. As mentioned above, this example is described as a display device providing an image, but other embodiments related to other contexts as listed above may be envisaged. The device comprises an energy reduction algorithm (320) that transforms an input image (305) into a modified image (325) that requires less energy when being used, for example when displayed on a screen. This algorithm is for example based on the principles of applying a dimming map (a.k.a attenuation map) as described in PCT/EP2023/082360, or using a Green MPEG attenuation map as described in PCT/EP2024/058766, or using a DASH dimming map as described in PCT/EP2024/058046 or using alternating complementary colors as described in PCT/EP2024/063489 or any other method allowing to perform an image energy reduction whose strength can be controlled. In such architecture, the user may adjust the reduction strength 310. Reducing the strength may increase the quality of the modified image but may increase the energy consumption. Increasing the reduction strength may decrease the energy consumption but may decrease the quality of the modified image. Therefore, the user is able to control the impact of the energy reduction on the quality of the visual content. The impact on quality is directly visible to the user. The impact of the energy is generally not understandable. One or more indicators are computed (330) and may be displayed (335) on the screen. As introduced above, some indicators may be more significative to a user than others. Thus, it is proposed to allow to select the set of indicators to be displayed for a given user or device.

The computation of the indicators may take into account different parameters such as for example the energy provider (provides information related to the energy mix between the different sources of energy: solar, wind, nuclear, coal, or others, provides information related to the energy contract signed by a given user), the geographical location (provides information related to the health statistics in the area, the energy mix), national or regional organizations related to health, pollution, biodiversity, etc., the service provider (provides information related to user profile, and their social recognition, information on the content modified). These parameters may be obtained from user settings (341), provider rules (342) or other parameters (343).

The general case is related to the control of energy, comprising energy saving and increasing energy consumption. The description below is done for energy saving but the principles apply similarly to the increase of energy consumption.

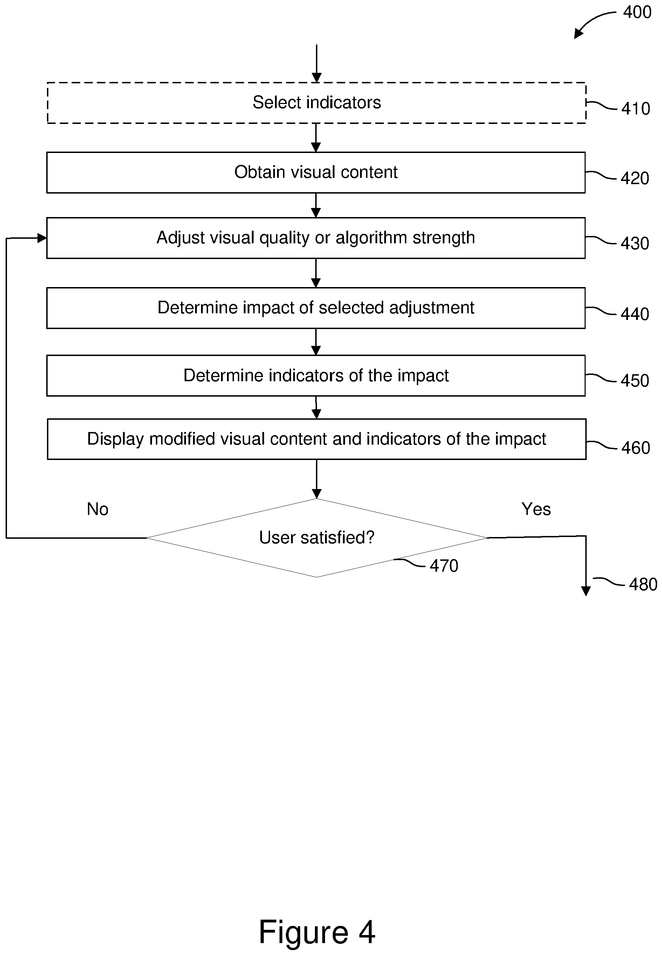

**Figure 4** illustrates an example process for providing indicators of the impact of energy consumption control according to embodiments. This process (400) is for example implemented by a device such as the device 100 of figure 1 and more particularly by a processor (101) of such device. This process is based on an energy consumption reduction algorithm that modifies (e.g., based on image processing techniques) a visual content according to a strength value so that the device requires less energy to display (or more generally to use) the modified visual content. A high strength value results into an important energy consumption reduction while a smaller strength value results into less important energy consumption reduction. A negative strength value results into an increase of the energy consumption.

The first step 410 is optional. In this step, the processor selects a set of indicators (e.g. one or more). Indeed, since not all of the indicators may be of interest for the user, a selection of the relevant indicators may be performed. This may be done by using various means for inputting such information. For example, a user may select a set of indicators in a list of indicators displayed on the screen. In another example, a list of indicators is read from a user profile, or from a configuration file of the device or is received from a service provider through communication means.

In step 420, a visual content with a given quality (and corresponding energy consumption when displayed) is obtained. In step 430, the energy consumption reduction algorithm processing strength is adjusted (i.e., modified) and the processor obtains the value of the algorithm processing strength (i.e., a strength value). This is for example done when a user modifies the expected quality level of this content, which in turns adjusts parameters of the processing algorithm responsible for modifying the content. Alternatively, the user may also directly adjust the strength of the processing algorithm. In step 440, the processor determines the impact of the energy consumption reduction processing algorithm based on some user related information, such as their geographical location, energy provider, some geographical health indicator, etc. In step 450, the processor determines indicators representative of the impact of the energy consumption reduction processing algorithm. Examples of indicators are the graphic elements illustrated in figures 2A and 2B. When a set of indicators are selected in the optional step 410, only the selected indicators need to be determined. In step 460, the processor applies the energy consumption reduction processing algorithm based on the value of the algorithm processing strength and uses (for example displays) the modified visual content and the determined indicators (i.e., graphic elements representing the impact of the reduction). This allows the user to evaluate the values of these indicators in relation to the quality level obtained on the content. In an embodiment, the modified visual content and the determined indicators are displayed on different displays or are provided to the user through a vocal or textual message or any haptic feedback. In step 470, the processor obtains an information representing the user satisfaction. When the user is satisfied, the adjustment of the algorithm strength is completed and as a result, the content and the indicators are further provided (e.g., displayed) in step 480. In case the user is not satisfied, the process iterates again on steps 430 to 470 for further adjustments of the expected quality or algorithm strength. One example for getting the user satisfaction information is to display a user interface asking the question. In another example, if the user does not change again the algorithm strength within a certain duration, it may mean that they are satisfied.

The indicator values may be displayed through numbers, colors, histogram bars, gauges, or any other graphical widget that represents a quantity.

At the start of the session, in one embodiment, no indicators are displayed until an action is taken to adjust the quality or reduction strength.

In embodiments, the indicators correspond to absolute values of indicators (e.g., some amount of money). These can be computed and displayed at the beginning of the session based on the user's related information (e.g., energy provider and contract, etc.).

In embodiments, previous values of the indicators may be displayed when starting the device, for example the values as set in a previous session and/or corresponding to the previous choice of quality by the user currently stored in the display device. In such case, the process would start at step 460.

In embodiments, the indicators represent a relative value corresponding to the direct increase/decrease resulting from the last choice of the user in step 430. Indeed, one possible choice is to increase the quality and therefore to increase the energy consumption, resulting in decrease of the health indicator for example. In such embodiment, their value may potentially be negative values to represent a regression in term of energy impact.

In embodiments, both the absolute value and the relative values are displayed.

In embodiments, the quality of the content may vary independently of any choice done by the user. For example, the energy reduction may be controlled by the system itself or the content provider or by some regulatory constraints. In this case, at the start of the session, values of indicators can be displayed from the actual system/content provider choice. In that case the process is modified to reflect this specific operating mode. More particularly, the last step 470 may be removed and the steps 430, and possibly 410, might not use any feedback by the user but rather be under system control.

In embodiments, the control is done as a combining of user and system choices. In this case, some weighting average may be used between the two, e.g., system choice corresponding to 1/3 in the final indicator level and user choice corresponding to 2/3. Depending on the indicators, either the system choice or the user choice might prevail over the other.

In embodiments, instead of graphic elements displayed on a screen, the indicators are using other type of feedback such as a textual message displayed on a dedicated screen, or an audio (vocal) message rendered by one or more loudspeakers or an haptic feedback rendered by one or more haptic actuators.

As mentioned above, the step 410 is optional. Indeed, the user or the controlling system may determine prior to the use of the device which indicators are particularly relevant and comprehensible for them. In case the user feedback is used, this can be done by selecting through a list of indicators provided by the device during a setting step. In this case, only these indicators will be shown while adjusting the processing algorithm.

In another embodiment, the list of indicators relevant to the user might be chosen in an automated manner from a user profile. For example, knowing the buying habits of a user and his/her tendency to pay attention to discounts and low cost devices buying habits, an economic indicator seems to be relevant. In another example, a user with health issues might be also particularly interested by an indicator of how much their health can be improved by reducing their greenhouse gases (GHG) emissions. In another example, a user particularly active in social media might be highly influenced by the amount of social recognition they might gain by lowering their energy consumption.

A first indicator may be related to health. Such indicator can be based on Disability-Adjusted Life Years (DALYs) indicator which captures health status. This health indicator is expressed per 1,000 inhabitants of a particular country. The DALYs indicator expresses a measure of the gap in healthy years of life lived by a population as compared with a normative standard. In other words, DALYs are a time-based measure that adds together years of life lost due to premature mortality with the equivalent number of years of life lived with disability or illness. Thus, the DALYs indicator includes the years of life lost due to premature mortality (YLLs) and the years lived with a disability (YLDs). Also, this indicator is expressed in terms of overall mortality (all diagnosis groups are included). Data on DALYs can be obtained from statistical databases on health-related indicators. Correlations have been established between DALYs and different GHG emissions for several EU countries as shown in Gavurova B, Rigelsky M, Ivankova V. Greenhouse Gas Emissions and Health in the Countries of the European Union, Front Public Health, 2021 Dec 10;9:756652, doi: 10.3389/fpubh.2021.756652. PMID: 34957016; PMCID: PMC8709531. This document comprises a table listing correlation coefficients between GHG emissions and DALYs by EU country for a set of greenhouse gases.

Therefore, a simple linear modeling such as in the linear equation $DALYs = \alpha * E_{CO_2}$ gives a health indicator, depending on the country, with a the correlation coefficient for the given country for a given greenhouse gas and $E_{CO_2}$ being the amount of green house gas emission, for example in CO2 equivalent (CO2 eq ).

Furthermore, it is possible to link the consumed energy to the amount of emitted GHG by a simple equation. Again, it depends on the energy mix of each country. For example, in France, the following figures present the contribution of each energy source to C02 emissions:

- 0.986 t CO2 eq/MWh for coal-fired plants
- 0.777 t CO2 eq /MWh for oil-fired plants
- 0.486 t CO2 eq /MWh for gas-turbine plants
- 0.352 t CO2 eq /MWh for co-generation & combined-cycle plants
- 0.583 t CO2 eq /MWh for other gas-fired plants
- 0.494 t CO2 eq /MWh for household waste

Based on these figures and using the current energy mix used in France, it is possible to derive the emission of CO2eq to produce 1kWh to around 75 gCO2eq/kWh.

This gives the following equation for the DALYs indicator for CO2 in France:

$$DALYs = 0.922 * 75 * E$$

With E the consumed energy in kWh.

A second indicator may be related to economics. The link between the amount of energy saved and a corresponding amount of money is quite straightforward. Depending on the energy provider elected by the user, depending on the time of the day/year, depending on the chosen contract, a corresponding price $P$ for 1 kWh is available, which allows a direct conversion of the amount of energy saved into an amount of money saved using the following equation:

$$I_{money} = E * P$$

With $E$ the amount of energy in kWh saved by modifying the quality of the video processing.

A third indicator may be related to pollution. The air pollution for example can be assessed through the measures of the quantities of different air pollutants, for example Sulfur Dioxide (S02). The largest source of SO2 in the atmosphere (more than half) is the burning of fossil fuels by power plants and other industrial facilities. The quantity of SO2 rejected in the atmosphere may be assessed per kg/MW-h. For example, some values may be in the range 3.8 to 10.6 kg/MW-h. The following equation is an example of computation of the quantity of SO2 from the energy consumption in MW-h, E, and an average quantity of SO2 per MW-h, $q_{SO2}$ :

$$Q_{SO2} = E * q_{SO2}$$

Similar indicators or an aggregation of several similar indicators of other pollutants can be used to provide a direct link between energy consumption and pollution.

A fourth indicator may be related to raw material. The digital sector contributes to the exponential growth of consumption of raw materials. From 1980 and 2008, global demand for metals almost doubled (87% increase). Demand has increased in volume, but also in diversity, as smartphones for example are made up of 50 to 70 chemical elements. Additionally, virtually no recycling of these elements is currently available. Usage of new devices either for replacing old or out-of-order equipment or for extending existing infrastructure results in an increasing demand of raw materials. Consuming content of a higher quality, (e.g., of a higher dynamic range) may often result in the need of a novel equipment supporting such features. On the contrary, consuming content of a lower quality (e.g., of a lower dynamic range) may first enable to keep previous equipment, and second, may enable a longer lifespan of the existing equipment. For example, displays forced to always have a higher backlight on may have a lower lifespan than if using a lower backlight level. Lowering the quality of the content may result in taking better care of the display equipment, thus increasing its lifespan, and consequently reducing the usage of raw materials. Such a saving may be estimated as a value proportional to the duration of use of low quality content.

A fifth indicator may be related to social recognition and personal branding. The importance of personal branding has increased significantly in the era of digital presence. Creating an online presence allows a user to stand out and lead to new possibilities. Digital (social media) badges are a powerful tool for enhancing a personal brand. Social media badges are little symbols or images showing an affiliation of a user with a social media site. A link can be created and managed between TV display energy savings and social media by creating a channel of information where energy saved by the user can be transmitted and valued on social media, through the automated acquisition of social media badges related to a behavior towards lowering the quality to reduce the energy consumption. In an example embodiment, a certain amount of energy saved through the user behavior may correspond to a social media badge of a given level, while higher amount of energy saved will enable the acquisition of social media badges of higher levels. At the same time, each social media update action can be displayed on the TV set, as a social recognition indication according to the present invention.

A sixth indicator may be related to biodiversity. Whilst climate change is the third-most important driver of biodiversity loss, it also interacts with and exacerbates other drivers. At the same time, climate change and biodiversity loss share many common anthropogenic drivers, including the overexploitation of natural resources, unprecedented energy consumption and transformation of land-, freshwater- and seascapes. Additionally, increased atmospheric greenhouse gas concentrations lead to global warming, altered precipitation regimes, frequent extreme weather events, and oxygen depletion and acidification of aquatic environments, which adversely affect biodiversity. Climate change is projected to affect the distribution of most species on earth. Climatically driven geographic range losses of more than 50% is projected in ~ 49% of insects, 44% of plants and 26% of vertebrates for warming of 3.2 °C above pre-industrial levels. At 2 °C, these projections of loss fall to 18% of insects, 16% of plants. Species richness of plants and vertebrates may be used as a proxy or indicator of biodiversity levels in general, which may be estimated from existing databases proposing a species distribution model as a function of global warning. From these databases, the geographical extent of areas called climate refugia, defined as areas retaining at least 75% of the species modelled present under the changed climate may be quantified to serve as a biodiversity indicator. Thus, using for example the relation between energy used and carbon emission, then the relation between carbon emission and temperature increase, and further the surface of the species refugia, a relation may be obtained to assess the impact of a lower quality content to the biodiversity.

Although some parts of the description refer to images, the embodiments are not restricted to images and apply to any type of visual media content such as conventional (2D) videos, stereoscopic (3D) images or videos, 360° immersive images or video, and more generally to multi-modal content for example also comprising audio, text and/or haptic media, based on the same principles as described above in the example embodiment of images but iterated temporally and/or spatially. In addition, the principles may apply to other contexts such as houses, vehicles, or industrial equipment as introduced above.

Although some parts of the description refer to quality of a content, the embodiments may apply to quality of service of a device or an application on a device.

In general, one or more other examples of embodiments can also provide a computer readable storage medium, e.g., a non-volatile computer readable storage medium, having stored thereon instructions for encoding or decoding picture information such as video data according to the methods or the apparatus described herein. One or more embodiments can also provide a computer readable storage medium having stored thereon a bitstream generated according to methods or apparatus described herein. One or more embodiments can also provide methods and apparatus for transmitting or receiving a bitstream or signal generated according to methods or apparatus described herein.

Many of the examples of embodiments described herein are described with specificity and, at least to show the individual characteristics, are often described in a manner that may sound limiting. However, this is for purposes of clarity in description and does not limit the application or scope of those aspects. Indeed, all the different aspects can be combined and interchanged to provide further aspects. Moreover, the embodiments, features, etc. can be combined and interchanged with others described in earlier filings as well.

Various implementations involve decoding. "Decoding", as used in this application, can encompass all or part of the processes performed, for example, on a received encoded sequence to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it also provides a block diagram of a corresponding apparatus. Similarly, when a figure is presented as a block diagram, it also provides a flow diagram of a corresponding method/process.

In general, the examples of embodiments, implementations, features, etc., described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. One or more examples of methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users. Also, use of the term "processor" herein is intended to broadly encompass various configurations of one processor or more than one processor.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Various embodiments are described herein. Features of these embodiments can be provided alone or in any combination, across various claim categories and types.

**Claims**

1.    A method comprising:

obtaining a visual content;
obtaining a strength value for an energy consumption control algorithm that controls an energy consumption needed for the visual content;
determining a value representative of an impact of the energy consumption control on at least one benefit for a user;
providing at least one indicator representative of the determined value;
applying the energy consumption control algorithm to the visual content according to the strength value and

providing the modified visual content.

2. The method of claim 1, wherein the at least one indicator and the modified visual content are displayed on a screen.

3. The method of claim 2, further comprising obtaining further input for modifying the strength value and updating the indicator and modified visual content based on the modified strength value.

4. The method of claim 3, further comprising iterating over multiple strength values until obtaining further input indicating a user satisfaction.

5. The method of any of claims 1 to 4, wherein the at least one indicator is representative of health or economics or pollution or raw material or social recognition or biodiversity.

6. The method of any of claims 1 to 4, wherein the at least one indicator is representative of health and the value representative of the impact of the energy consumption control is based on multiplying the energy saving or energy increase by an amount of greenhouse emissions per energy unit and a health status per unit of emitted carbon for a country.

7. The method of any of claims 1 to 4, wherein the at least one indicator is representative of economics and the value representative of the impact of the energy consumption control is based on multiplying the energy saved or consumed by a price of the energy.

8. An apparatus comprising a processor configured to:

   obtain a visual content;
   obtain a strength value for an energy consumption control algorithm that controls an energy consumption needed for the visual content;
   determine a value representative of an impact of the energy consumption control on at least one benefit for a user;
   provide at least one indicator representative of the determined value;
   apply the energy consumption control algorithm to the visual content according to the strength value and
   provide the modified visual content.

9. The apparatus of claim 8, wherein the at least one indicator and the modified visual content are displayed on a screen.

10. The apparatus of claim 9, wherein the processor is further configured to obtain further input for modifying the strength value and updating the indicator and modified visual content based on the modified strength value.

11. The apparatus of claim 10, wherein the processor is further configured to iterate over multiple strength values until obtaining further input indicating a user satisfaction.

12. The apparatus of any of claims 8 to 11, wherein the at least one indicator is representative of health or economics or pollution or raw material or social recognition or biodiversity.

13. The apparatus of any of claims 8 to 12 selected in a set comprising smartphones, tablets, laptops, monitors, head-mounted displays, television sets, video projectors, computer screens, control and/or entertainment systems for vehicles, advertisement display panels, and medical monitors.

14. A computer program including instructions, which, when executed by a computer, cause the computer to carry out the method according to any of claims 1 to 7.

15. A non-transitory computer readable medium storing executable program instructions to cause a computer executing the instructions to perform a method according to any of claims 1 to 7.

Figure 1

Better health Savings Pollution Raw material Social recognition Biodiversity

40 Dalys

Figure 2A

Better health

Economic benefits

Depollution

Raw material

Social recognition

Biodiversity

## Figure 2B

Algorithm strength — 310

— 300

305

Energy
Control
Algorithm — 320

325

Compute indicator — 330

335

341 — User
Setting

Provider
Rules — 342

Other
parameters — 343

## Figure 3

400

┌ ─ ─ ─ ─ ─ ─ ─ ─ ─ ─ ─ ─ ─ ─ ─ ─ ─ ─ ─ ─ ─ ─ ┐
│                    Select indicators                    │  410
└ ─ ─ ─ ─ ─ ─ ─ ─ ─ ─ ─ ─ ─ ─ ─ ─ ─ ─ ─ ─ ─ ─ ┘

| Obtain visual content | 420

| Adjust visual quality or algorithm strength | 430

| Determine impact of selected adjustment | 440

| Determine indicators of the impact | 450

| Display modified visual content and indicators of the impact | 460

No                      User satisfied?                      Yes

470

480

# Figure 4

Europäisches
Patentamt

European
Patent Office

Office européen
des brevets

# EUROPEAN SEARCH REPORT

**Application Number**

EP 24 30 7203

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/208655 A1 (INTERDIGITAL CE PATENT HOLDINGS SAS [FR]) 10 October 2024 (2024-10-10) * page 9, line 12 - page 12, line 4; figures 2,3 * | 1-3, 5-10, 12-15 | INV. H04N21/431 G06F1/3203 G06F1/3234 H04N21/443 |
| X | WO 2024/245767 A1 (INTERDIGITAL CE PATENT HOLDINGS SAS [FR]) 5 December 2024 (2024-12-05) * page 23, line 30 - page 36, line 1; figures 6,7,10A-10D,11 * | 1-15 | |
| A,D | GAVUROVA BRIGELSKY MIVANKOVA V: "Greenhouse Gas Emissions and Health in the Countries of the European Union", FRONT PUBLIC HEALTH, vol. 9, 10 December 2021 (2021-12-10), page 756652, XP002813476, * the whole document * | 6,7 | |

**TECHNICAL FIELDS SEARCHED (IPC)**

H04N
G06F

The present search report has been drawn up for all claims

| Place of search | Date of completion of the search | Examiner |
|---|---|---|
| The Hague | 4 June 2025 | Santos Conde, José |

EPO FORM 1503 03.82 (P04C01)

## ANNEX TO THE EUROPEAN SEARCH REPORT
## ON EUROPEAN PATENT APPLICATION NO.

**EP 24 30 7203**

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2025

| Patent document cited in search report | Publication date | Patent family member(s) | Publication date |
|---|---|---|---|
| WO 2024208655 A1 | 10-10-2024 | NONE | |
| WO 2024245767 A1 | 05-12-2024 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2023082360 W
- EP 2024058766 W
- EP 2024058046 W
- EP 2024063489 W